# EUROPÄISCHE PATENTSCHRIFT

(11) **EP 3 159 100 B1**
(45) Veröffentlichungstag und Bekanntmachung des Hinweises auf die Patenterteilung: **19.02.2020**
(21) Anmeldenummer: 15190878.7
(22) Anmeldetag: 21.10.2015
(51) Int. Cl.: B23Q 1/01, B23Q 1/58, B23Q 11/08

(54) **DREHMASCHINE**
ROTATING MACHINE
TOUR

(43) Veröffentlichungstag der Anmeldung: 26.04.2017
(73) Patentinhaber: Gedee Weiler Pvt Ltd, 641023 Coimbatore (IN)
(72) Erfinder: Rajkumar, Gopalasamy, 641018 Coimbatore (IN)
(74) Vertreter: Dr. Gassner & Partner mbB

(56) Entgegenhaltungen:
- DE-U1-202011 108 058
- US-A- 972 574
- US-A- 4 792 267
- US-A1- 2012 090 437

## Beschreibung

Die Erfindung betrifft eine Drehmaschine nach dem Oberbegriff des Patentanspruchs 1.

Eine derartige Drehmaschine ist aus der US 972 574 A bekannt.

Der Prospekt "TL-Baureihe Drehmaschinen für den Werkzeugbau" der Firma Haas Automation Europe aus 11/2004 offenbart eine Drehmaschine, bei welcher der Schlitten mittels Linearführungen auf dem Bett in z-Richtung verfahrbar angebracht ist.

Aus dem Prospekt "Drehmaschinen" der Firma DMT Drehmaschinen GmbH & Co. KG aus 01/2007 ist eine Drehmaschine vom Typ CD 322 bekannt. Dabei ist der Schlitten in z-Richtung mittels abgestufter Gleitführungen geführt.

Bei den bekannten Drehmaschinen tritt bei einer Bewegung des Schlittens in z-Richtung mitunter ein Widerstand auf. Zur Überwindung eines solchen Widerstands ist ein erhöhter Kraftaufwand erforderlich, welcher die Handhabung der Drehmaschine erschwert.

Aufgabe der Erfindung ist es, die Nachteile nach dem Stand der Technik zu beseitigen. Es soll insbesondere eine Drehmaschine angegeben werden, welche im praktischen Betrieb robust und störunanfällig ist.

Diese Aufgabe wird durch die Merkmale des Patentanspruchs 1 gelöst. Zweckmäßige Ausgestaltungen der Erfindung ergeben sich aus den Merkmalen der Patentansprüche 2 bis 11.

Nach Maßgabe der Erfindung wird vorgeschlagen,
dass an den in einer x-Richtung einander gegenüberliegenden Außenseiten des Betts zwei in z-Richtung sich erstreckende Schultern vorgesehen sind,
dass auf einer dem Schlitten zugewandten Stützfläche jeder Schulter eine in z-Richtung sich erstreckende Linearführung abgestützt ist, und
dass der Schlitten zur Bewegung in z-Richtung auf den beiden Linearführungen angebracht ist, wobei am Bett (1) in einer Position gegenüberliegend der Stützflächen (4, 5) jeweils ein in z-Richtung sich ersteckendes erstes Schutzblech (14, 16) angebracht ist, dessen in z-Richtung sich erstreckende erste freie Kante (15, 17) in einen dazu korrespondierenden ersten Schlitz (11, 13) im Stützschenkel (10, 12) von dessen Innenseite her eingreift.

Im Sinne der vorliegenden Erfindung wird unter der "z-Richtung" die Bewegungsrichtung des Schlittens verstanden. Die z-Richtung entspricht üblicherweise der Erstreckungsrichtung der Spindel. Die "x-Richtung" verläuft senkrecht zur z-Richtung. Die x-Richtung und die z-Richtung spannen eine horizontale Ebene auf. Senkrecht zur x- und z-Richtung verläuft eine "y-Richtung", welche der Vertikalrichtung entspricht.

Im Sinne der vorliegenden Erfindung wird unter dem Begriff "Schlitten" insbesondere ein Werkzeugschlitten verstanden, auf dem ein Drehwerkzeug, insbesondere ein Drehmeißel, ein Bohrer und dgl. gehalten ist. Der Werkzeugschlitten ist vorteilhafterweise aus Grauguss hergestellt. Das Drehwerkzeug kann beispielsweise auf einem auf dem Schlitten angebrachten Planschlitten in x-Richtung hin- und herbewegbar sein.

Nach den Merkmalen der Erfindung erstrecken sich von einander gegenüberliegenden Außenseiten des Betts Schultern, auf denen in z-Richtung verlaufende Linearführungen vorgesehen sind. Auf den Linearführungen ist der Schlitten abgestützt. Infolgedessen überdeckt der Schlitten die Linearführungen. Damit wird ein unerwünschter Eintrag z. B. von Spänen in die Linearführungen erschwert oder unterbunden. Die vorgeschlagene Drehmaschine ist im praktischen Betrieb robust und störunanfällig.

Nach einer vorteilhaften Ausgestaltung erstreckt sich jede Stützfläche im Wesentlichen horizontal vom Bett, d. h. die Stützfläche erstreckt sich im Wesentlichen in der z-x-Ebene. Unter dem Begriff "im Wesentlichen horizontal" wird verstanden, dass jede Stützfläche auch mehrere horizontale Flächen aufweisen kann, welche beispielsweise durch Stufen voneinander abgesetzt sind. Eine "im Wesentlichen horizontale Fläche" ist eine Fläche, welche auch bezüglich der z-Achse geneigt sein kann um höchstens 20°, vorzugsweise um höchstens 10°. Das ermöglicht die Verwendung eines im Wesentlichen herkömmlich gestalteten Schlittens.

Nach einer weiteren vorteilhaften Ausgestaltung ist die Linearführung eine Wälzkörper-Linearführung. Es kann sich insbesondere um eine Kugelumlauf-Linearführung handeln. Als Wälzkörper können aber auch Walzen, Rollen oder Nadeln Anwendung finden. Derartige Wälzkörper-Linearführungen ermöglichen eine besonders leichtgängige Bewegung des Schlittens relativ zum Bett.

Nach einer weiteren vorteilhaften Ausgestaltung umfasst die Linearführung eine an der Stützfläche befestigte Linearführungsschiene und einen darauf geführten Linearführungsschlitten, welcher an einem sich vom einer dem Bett zugewandten Unterseite des Schlittens erstreckenden Stützschenkel angebracht ist. Der Linearführungsschlitten übergreift üblicherweise die Linearführungsschiene. Das trägt weiter dazu bei, dass ein Eintrag von Staub, Schmutz oder Spänen in den Bereich der Linearführung verhindert wird.

Vorteilhafterweise weist der Stützschenkel eine dem Bett abgewandte im Wesentlichen geschlossene Außenseite und eine dem Bett zugewandte Innenseite. Unter einer "im Wesentlichen geschlossenen Außenseite" wird verstanden, dass die Außenseite zumindest zu 90% geschlossen ist. Es können gleichwohl in der Außenseite eine oder mehrere Bohrungen, insbesondere Gewindebohrungen, zur Befestigung weiterer Elemente vorgesehen sein. Derartige Gewindebohrungen sind üblicherweise durch darin eingeschraubte Schrauben verschlossen. Am Bett ist in einer Position gegenüberliegend der Stützflächen jeweils ein in z-Richtung sich erstreckendes erstes Schutzblech angebracht, dessen in z-Richtung sich erstreckende erste freie Kanten in einen dazu korrespondierenden ersten Schlitz im Stützschenkel von dessen Innenseite her eingreift. Durch den Eingriff des ersten Schutzblechs in den ersten Schlitz im Stützschenkel von dessen Innenseite her sowie durch die im Wesentlichen geschlossene Gestaltung der Außenseite des Stützschenkels wird weiter ein Eintrag von Schmutz, Staub oder Schneidspänen in den Bereich der Linearführung verhindert.

Nach einer weiteren Ausgestaltung ist an einem der Stützschenkel ein Spindelmutter-Aufnahmeschenkel vorgesehen, welcher sich zum Bett hin in einen durch die benachbarte Schulter überdeckten Bereich erstreckt. Der Spindelmutter-Aufnahmeschenkel erstreckt sich in einen Bereich unterhalb der Schulter. Dieser Bereich ist in der Vertikalrichtung, vorzugsweise vollständig, durch die Schulter überdeckt, wodurch ein Eintrag von Spänen, Staub und Schmutz in diesen Bereich verhindert wird. Zweckmäßigerweise ist die Spindelmutter im Spindelmutter-Aufnahmeschenkel im überdeckten Bereich angeordnet. Bei der Spindelmutter kann es sich um eine Kugelumlaufmutter handeln.

Nach einer weiteren vorteilhaften Ausgestaltung ist an der den überdeckten Bereich bildenden einen Schulter ein in z-Richtung sich erstreckendes zweites Schutzblech angebracht, dessen in z-Richtung sich erstreckende zweite freie Kante in einen dazu korrespondierenden zweiten Schlitz im Spindelmutter-Aufnahmeschenkel eingreift. Durch das zweite Schutzblech wird ein Eintrag von Staub, Schmutz oder Spänen in den Bereich der Spindelmutter unterbunden. Das macht die vorgeschlagene Drehmaschine besonders robust und unanfällig gegen durch den Eintrag von Schmutz, Staub oder Spänen bedingte Störungen.

Vorteilhafterweise ist der zweite Schlitz L-förmig ausgebildet und die zweite freie Kante ist in einem horizontal verlaufenden Schlitzabschnitt angeordnet, welcher an einer der einen Schulter abgewandten Unterseite der Spindelmutter sich in den Spindelmutter-Aufnahmeschenkel erstreckt. Abgesehen davon kann das zweite Schutzblech vorteilhafterweise eine in z-Richtung sich erstreckende dritte freie Kante aufweisen, welche einen ersten Linearführungsschlitz zwischen der einen Linearführungsschiene und dem einen Linearführungsschlitten in horizontaler Richtung überdeckt. Die vorgenannten Merkmale bewirken in konstruktiv einfacher Weise eine weitgehende Kapselung der Linearführung sowie der Spindelmutter, welche einen Eintrag von Staub, Schmutz oder Spänen nahezu unmöglich macht.

Nach einer weiteren Ausgestaltung ist an der gegenüberliegenden anderen Schulter ein in z-Richtung sich erstreckendes drittes Schutzblech angebracht, dessen in z-Richtung sich erstreckende vierte freie Kante einen zweiten Linearführungsschlitz zwischen der anderen Linearführungsschiene und dem anderen Linearführungsschlitten in horizontaler Richtung überdeckt. Damit wird in ähnlicher Weise wie bei der einen Linearführung auch bei der anderen Linearführung dem Eintrag von Staub, Schmutz oder Spänen entgegengewirkt.

Die Schutzbleche sind zweckmäßigerweise aus Metall, insbesondere aus Edelstahl oder Aluminium, oder auch aus Kunststoff, hergestellt.

Nachfolgend wird ein Ausführungsbeispiel der Erfindung anhand der Zeichnungen näher erläutert. Es zeigen:
- Fig. 1: Eine erste perspektivische Ansicht einer Betteinheit ohne Schlitten,
- Fig. 2: eine zweite perspektivische Ansicht gemäß Fig. 1,
- Fig. 3: eine perspektivische Ansicht der Betteinheit gemäß Fig. 1 mit Schlitten,
- Fig. 4: eine zweite perspektivische Ansicht gemäß Fig. 3,
- Fig. 5: eine Schnittansicht in der Schnittlage A-A gemäß Fig. 1 und

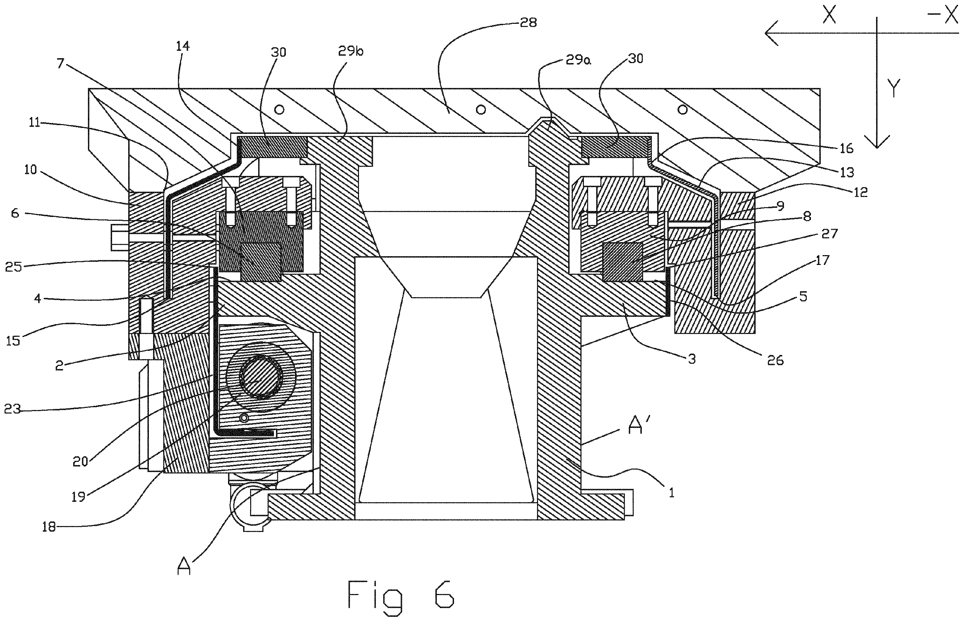

- Fig. 6: eine Schnittansicht in der Schnittlage B-B gemäß Fig. 3.

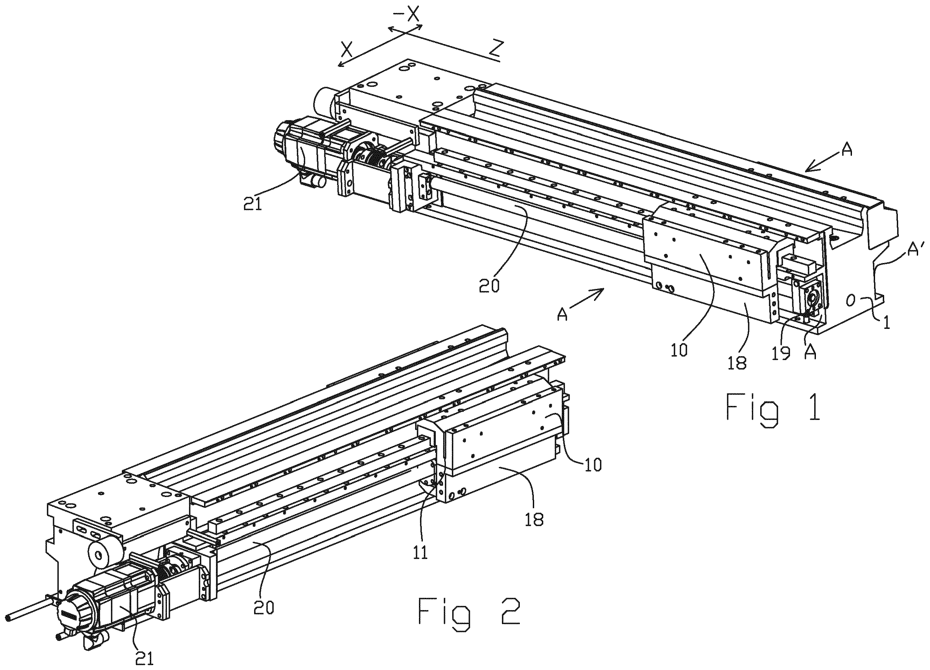

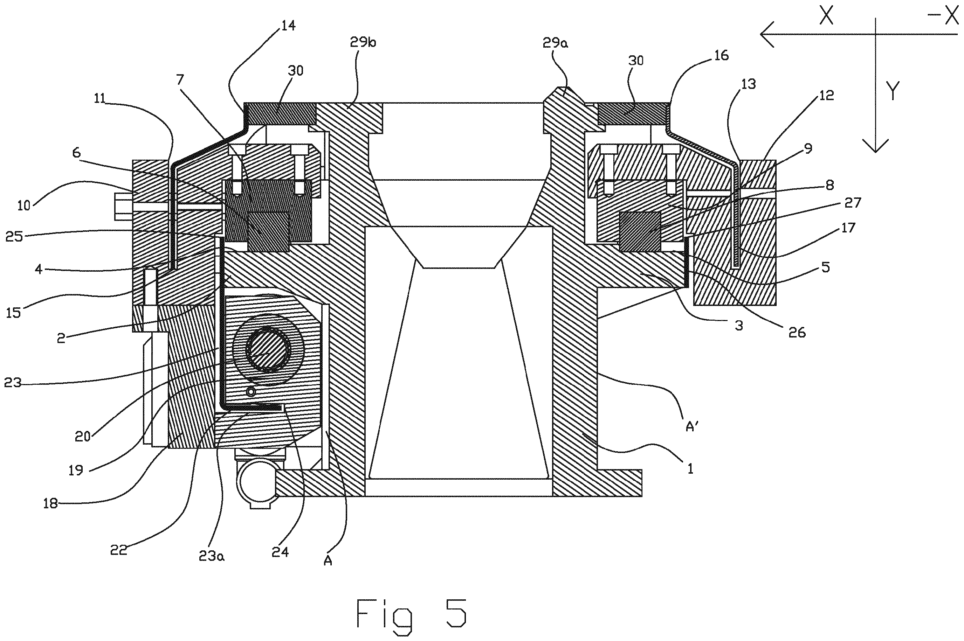

Fig. 1 und 2 zeigen perspektivische Ansichten einer Betteinheit, die Fig. 5 eine Schnittansicht gemäß der Schnittlage A-A in Fig. 1. Ein Spindelstock der Drehmaschine ist in den Figuren der Übersichtlichkeit halber weggelassen.

Wie aus den Fig. 1, 2 und 5 ersichtlich ist, weist ein, beispielsweise aus Gusseisen hergestelltes Bett 1 zwei in z-Richtung sich erstreckende Wände mit zwei einander gegenüberliegenden Außenseiten A und A' auf. Von den Außenseiten A erstreckt sich in x-Richtung eine erste Schulter 2 und von der Außenseite A' erstreckt sich in die entgegengesetzte -x-Richtung eine zweite Schulter 3 in eine zur ersten Schulter 2 entgegengesetzte Richtung. Die ersten Schulter 2 weist eine erste horizontale Stützfläche 4 und die zweite Schulter 3 eine zweite horizontale Stützfläche 5 auf. Eine auf der ersten Stützfläche 4 abgestützte erste Linearführung umfasst eine erste Linearführungsschiene 6 und einen darauf geführten ersten Linearführungsschlitten 7. Eine zweite Linearführung umfasst eine auf der zweiten Stützfläche 5 abgestützte zweite Linearführungsschiene 8 und einen darauf geführten zweiten Linearführungsschlitten 9. Die erste Linearführungsschiene 6 und/oder die zweite Linearführungsschiene 8 sind auf den Schultern 2, 3 zweckmäßigerweise mittels Schrauben befestigt (hier nicht gezeigt). Die erste Linearführungsschiene und die zweite Linearführungsschiene liegen jeweils an einer von der ersten 2 und der zweiten Schulter 3 sich erstreckenden vertikalen Anschlagfläche an, welche an einem dem Bett zugewandten Abschnitt der Schultern 2, 3 gebildet ist. Um eine exakt gerade Erstreckungsrichtung der ersten 6 und/oder der zweiten Linearführungsschiene 8 zu gewährleisten, sind Exzenterbuchsen (hier nicht gezeigt) vorgesehen, mit denen die Linearführungsschienen 6, 8 gegen die vertikalen Anschlagflächen gezwungen werden, bevor sie mittels der Schrauben befestigt werden.

Am ersten Linearführungsschlitten 7 ist ein erster Stützschenkel 10 befestigt, welcher einen ersten Schlitz 11 aufweist. Am zweiten Linearführungsschlitten 9 ist ein zweiter Stützschenkel 12 angebracht, welcher einen weiteren ersten Schlitz 13 aufweist. Die ersten Schlitze 11, 13 erstrecken sich in einer z-y-Ebene und öffnen sich zur Oberseite der Stützschenkel 10, 12.

Am Bett 1 ist einer Position gegenüberliegend der ersten Stützfläche 4 ein erstes Schutzblech 14 angebracht, dessen erste freie Kante 15 sich in den ersten Schlitz 11 erstreckt. In ähnlicher Weise ist an der zweiten Stützfläche 5 ein weiteres erstes Schutzblech 16 angebracht, dessen weitere freie erste Kante 17 sich in den weiteren ersten Schlitz 13 erstreckt. Die ersten Schutzbleche 14, 16 sind stufenartig gebogen und weisen jeweils eine vom Bett 1 in Richtung zu den jeweiligen Stützschenkeln 10, 12 hin abfallende Schrägfläche auf.

Der erste Schlitz 11 und/oder der weitere erste Schlitz 13 weist/weisen einen in x-Richtung sich erstreckende erste Weite von 2 bis 10 mm, vorzugsweise 3 bis 8 mm, besonders bevorzugt 4 bis 6 mm, auf.

Das erste Schutzblech 14 und das weitere erste Schutzblech 16 weisen eine Dicke im Bereich von 1 bis 5 mm, vorzugsweise 1,5 bis 3,5 mm, besonders bevorzugt 2 bis 3 mm, auf.

Am ersten Stützschenkel 10 ist ein Spindelmutter-Aufnahmeschenkel 18 angebracht, welcher sich in einen Bereich unterhalb der ersten Schulter 2 erstreckt. Im Spindelmutter-Aufnahmeschenkel 18 ist eine Spindelmutter 19 aufgenommen, in welche eine Spindel 20 eingreift, die mit dem Motor 21, bei dem es sich vorzugsweise um einen Schrittmotor handelt, angetrieben wird.

An einer freien Außenseite der ersten Schulter 2 ist ein zweites Schutzblech 22 angebracht, welches sich in einen im Spindelmutter-Aufnahmeschenkel 18 gebildeten L-förmigen zweiten Schlitz 23 erstreckt. Der zweite Schlitz 23 weist einen horizontalen Abschnitt 23a auf, der sich in einem Bereich unterhalb der Spindelmutter 19 erstreckt. Eine zweite freie Kante 24 des zweiten Schutzblechs 22 erstreckt sich in den horizontalen Abschnitt 23a des zweiten Schlitzes 23. Eine dritte freie Kante 25 des zweiten Schutzblechs 22 überdeckt einen ersten Linearführungsschlitz, welcher zwischen der ersten Linearführungsschiene 6 und dem ersten Linearführungsschlitten 7 gebildet ist.

Der zweite Schlitz 23 weist eine in x-Richtung sich erstreckende zweite Schlitzweite im Bereich von 2 bis 10 mm, vorzugsweise 3 bis 8 mm, besonderes bevorzugt 4 bis 6 mm, auf.

Wie insbesondere aus Fig. 5 hervorgeht, kann der Spindelmutter-Aufnahmeschenkel 18 insbesondere zur Erleichterung der Herstellung des zweiten Schlitzes 23 aus zwei Teilen gebildet sein, welche beispielsweise mittels einer Schraubverbindung miteinander verbunden sind.

An einer weiteren freien Außenseite der zweiten Schulter 3 ist ein drittes Schutzblech 26 angebracht, dessen freie vierte Kante 27 einen zweiten Linearführungsschlitz zwischen der zweiten Linearführungsschiene 8 und dem zweiten Linearführungsschlitten 9 in horizontaler Richtung abdeckt.

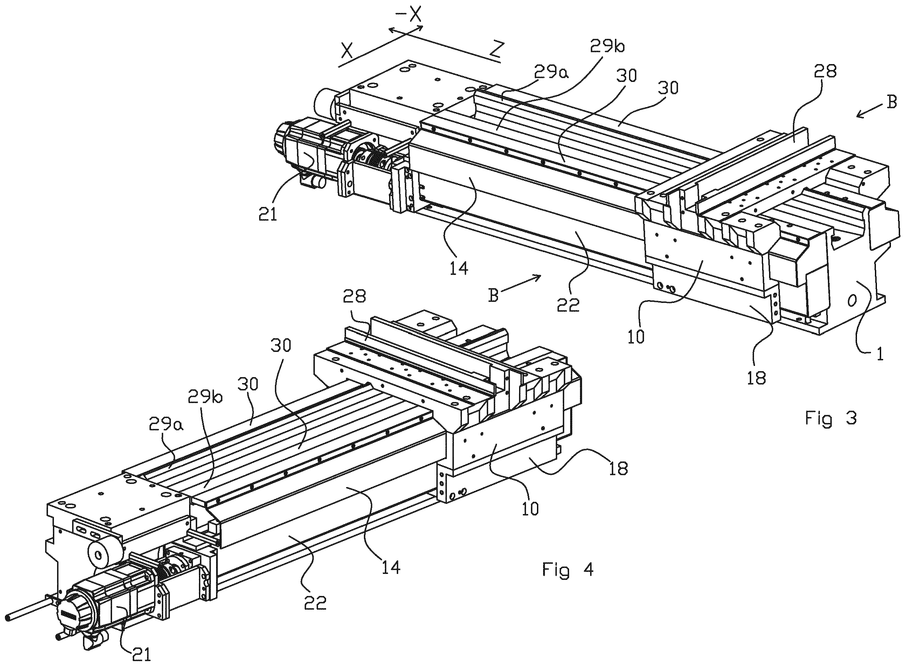

Die Fig. 3 und 4 zeigen die Betteinheit gemäß Fig. 1 und 2 in perspektivischen Ansichten, wobei auf den Stützschenkeln 10,12 ein Schlitten 28 montiert ist.

An einer dem Schlitten 28 zugewandten Oberseite des Betts 1 sind eine erste Gleitführungsfläche 29a und eine zweite Gleitführungsfläche 29b vorgesehen, welche der Führung eines (hier nicht gezeigten) Reitstocks dienen. Die erste Gleitführungsfläche 29a bildet eine Prismenführung, wohingegen die zweite Gleitführungsfläche 29b horizontal ausgebildet ist. Die ersten Schutzbleche 14, 16 sind über Zwischenstücke 30 in einem den Gleitführungsflächen 29a, 29b benachbarten Bereich an der Außenseite des Betts 1 angebracht. Die Zwischenstücke 30 überdecken zumindest abschnittsweise die Stützschenkel 10, 12 und die daran Linearführungsschlitten 7, 9.

Die Funktion der Vorrichtung ist folgende:
Der Schlitten 28 ist über die Stützschenkel 10, 12 und die Linearführungen auf die Schultern 2, 3 abgestützt, welche sich von den Außenseiten A, A' des Betts 1 erstrecken. Infolgedessen ist der Schlitten 28 leichtgängig in z-Richtung bewegbar.

Durch die ersten Schutzbleche 14, 16, das zweite Schutzblech 22 sowie das dritte Schutzblech 26 wird ein Eintrag von Staub, Schmutz oder Spänen in den Bereich der Linearführungen sowie der Spindelmutter 19 sicher und zuverlässig vermieden.

Die ersten Schutzbleche 14, 16, das zweite Schutzblech 22 und/oder das dritte Schutzblech 26 sind vorzugsweise aus einem rostfreien Metall, insbesondere Edelstahl, hergestellt. Ein in y-Richtung sich erstreckender Abstand zwischen der ersten freien Kante 15 und einem gegenüberliegenden Boden des ersten Schlitzes 11 beträgt 0,5 bis 10 mm, vorzugsweise 1 bis 5 mm, besonders bevorzugt 2 bis 4 mm. Ein in y-Richtung sich erstreckender weiterer Abstand zwischen der freien ersten Kante 17 und einem gegenüberliegenden weiteren Boden des weiteren ersten Schlitzes 13 kann ebenfalls 0,5 bis 10 mm, vorzugsweise 1 bis 5 mm, besonders bevorzugt 2 bis 4 mm betragen. Zweckmäßigerweise sind der erste und der zweite Abstand im Wesentlichen gleich, d. h. sie weichen voneinander um höchstens 20% ab.

Die vorgeschlagene Drehmaschine ist konstruktiv einfach gestaltet und sie ist robust und störunanfällig. Sie ermöglicht eine äußerst präzise Bearbeitung von Werkstücken.

### Bezugszeichenliste

- 1: Bett
- 2: erste Schulter
- 3: zweite Schulter
- 4: erste Stützfläche
- 5: zweite Stützfläche
- 6: erste Linearführungsschiene
- 7: erster Linearführungsschlitten
- 8: zweite Linearführungsschiene
- 9: zweiter Linearführungsschlitten
- 10: erster Stützschenkel
- 11: erster Schlitz
- 12: zweiter Stützschenkel
- 13: weiterer erster Schlitz
- 14: erstes Schutzblech
- 15: erste freie Kante
- 16: weiteres erstes Schutzblech
- 17: weitere erste freie Kante
- 18: Spindelmutter-Aufnahmeschenkel
- 19: Spindelmutter
- 20: Spindel
- 21: Motor
- 22: zweites Schutzblech
- 23: zweiter Schlitz
- 23a: horizontaler Abschnitt
- 24: zweite freie Kante
- 25: dritte freie Kante
- 26: drittes Schutzblech
- 27: vierte freie Kante
- 28: Schlitten
- 29a: erste Gleitführungsfläche
- 29b: zweite Gleitführungsfläche
- 30: Zwischenstück

- A, A': Außenseite

## Patentansprüche

1. Drehmaschine mit einem auf einem Bett (1) geführten Schlitten (28), welcher mittels einer mit einem Motor (21) angetriebenen Spindel (20) in einer z-Richtung bewegbar ist,
wobei an den in einer x-Richtung einander gegenüberliegenden Außenseiten (A, A') des Betts (1) zwei in z-Richtung sich erstreckende Schultern (2, 3) vorgesehen sind,
wobei auf einer dem Schlitten (28) zugewandten Stützfläche (4, 5) jeder Schulter (2, 3) eine in z-Richtung sich erstreckende Linearführung abgestützt ist, und wobei der Schlitten (28) zur Bewegung in z-Richtung auf den beiden Linearführungen angebracht ist,
**dadurch gekennzeichnet, dass** am Bett (1) in einer Position gegenüberliegend der Stützflächen (4, 5) jeweils ein in z-Richtung sich ersteckendes erstes Schutzblech (14, 16) angebracht ist, dessen in z-Richtung sich erstreckende erste freie Kante (15, 17) in einen dazu korrespondierenden ersten Schlitz (11, 13) in einem Stützschenkel (10, 12) des Schlittens (28) von dessen Innenseite her eingreift.

2. Drehmaschine nach Anspruch 1, wobei jede Stützfläche (4, 5) sich im Wesentlichen horizontal vom Bett (1) erstreckt.

3. Drehmaschine nach einem der vorhergehenden Ansprüche, wobei die Linearführung eine Wälzkörper-Linearführung ist.

4. Drehmaschine nach einem der vorhergehenden Ansprüche, wobei die Linearführung eine an der Stützfläche (4, 5) befestigte Linearführungsschiene (6, 8) und einen darauf geführten Linearführungsschlitten (7, 9) umfasst, welcher an einem sich vom einer dem Bett (1) zugewandten Unterseite des Schlittens (28) erstreckenden Stützschenkel (10, 12) angebracht ist.

5. Drehmaschine nach Anspruch 4, wobei der Stützschenkel (10, 12) eine dem Bett (1) abgewandte, vorzugsweise im Wesentlichen geschlossene, Außenseite und eine dem Bett (1) zugewandte Innenseite aufweist.

6. Drehmaschine nach einem der vorhergehenden Ansprüche 4-5, wobei an einem der Stützschenkel (10, 12) ein Spindelmutter-Aufnahmeschenkel (18) vorgesehen ist, welcher sich zum Bett (1) hin in einen durch die benachbarte Schulter (2) überdeckten Bereich erstreckt.

7. Drehmaschine nach Anspruch 6, wobei die Spindelmutter (19) im Spindelmutter-Aufnahmeschenkel (18) im überdeckten Bereich angeordnet ist.

8. Drehmaschine nach einem der vorhergehenden Ansprüche, wobei an der den überdeckten Bereich bildenden einen Schulter (2) ein in z-Richtung sich ersteckendes zweites Schutzblech (22) angebracht ist, dessen in z-Richtung sich erstreckende zweite freie Kante (24) in einen dazu korrespondierenden zweiten Schlitz (23) im Spindelmutter-Aufnahmeschenkel (18) eingreift.

9. Drehmaschine nach einem der vorhergehenden Ansprüche, wobei der zweite Schlitz (23) L-förmig ausgebildet ist und die zweite freie Kante (24) in einem horizontal verlaufenden Schlitzabschnitt (23a) angeordnet ist, welcher an einer der einen Schulter (2) abgewandten Unterseite der Spindelmutter (19) sich in den Spindelmutter-Aufnahmeschenkel (18) erstreckt.

10. Drehmaschine nach einem der vorhergehenden Ansprüche, wobei das zweite Schutzblech (22) eine in z-Richtung sich erstreckende dritte freie Kante (25) aufweist, welche einen ersten Linearführungsschlitz zwischen der einen Linearführungsschiene (6) und dem einen Linearführungsschlitten (7) in horizontaler Richtung überdeckt.

11. Drehmaschine nach einem der vorhergehenden Ansprüche, wobei an der gegenüberliegenden anderen Schulter (3) ein in z-Richtung sich ersteckendes drittes Schutzblech (26) angebracht ist, dessen in z-Richtung sich erstreckende vierte freie Kante (27) einen zweiten Linearführungsschlitz zwischen der anderen Linearführungsschiene (8) und dem anderen Linearführungsschlitten (9) in horizontaler Richtung überdeckt.

## Claims

1. A lathe comprising a carriage (28) guided on a bed (1), which carriage is movable in a z direction by a spindle (20) driven by a motor (21),
wherein two shoulders (2, 3) extending in the z direction are provided on the outer surfaces (A, A') of the bed (1) which are opposite to each other in a x direction,
wherein a linear guidance extending in the z direction is supported on a support surface (4, 5) of each shoulder (2, 3) facing the carriage (28), and
wherein the carriage (28) is mounted on the two linear guidances for movement in the z direction,
**characterized in that** a first protective plate (14, 16) extending in the z direction is attached to the bed (1) in a position opposite to the support surfaces (4, 5), wherein the first free edge (15, 17) of which protective plate extending in the z direction engages in a corresponding first slot (11, 13) in a support leg (10, 12) of the carriage (28) from the interior side thereof.

2. The lathe according to claim 1, wherein each support surface (4, 5) substantially extends horizontally from the bed (1).

3. The lathe according to one of the preceding claims, wherein the linear guidance is a rolling element linear guidance.

4. The lathe according to one of the preceding claims, wherein the linear guidance comprises a linear guide rail (6, 8) fixed to the support surface (4, 5) and a linear guide carriage (7, 9) guided thereon, which is attached to a support leg (10, 12) extending from a bottom surface of the carriage (28) facing the bed (1).

5. The lathe according to claim 4, wherein the support leg (10, 12) has an exterior side facing away from the bed (1), which exterior side preferably is substantially closed, and an interior side facing the bed (1).

6. The lathe according to one of the preceding claims 4-5,
wherein a spindle nut receiving leg (18) is provided on one of the support legs (10, 12), which extends towards the bed (1) into a region overlapped by the adjacent shoulder (2).

7. The lathe according to claim 6, wherein the spindle nut (19) is arranged in the spindle nut receiving leg (18) in the overlapped region.

8. The lathe according to one of the preceding claims, wherein a second protective plate (22) extending in the z direction is attached to either one (2) of the shoulders forming the overlapped region, the second free edge (24) of the protective plate extending in the z direction engaging in a corresponding second slot (23) in the spindle nut receiving leg (18).

9. The lathe according to one of the preceding claims, wherein the second slot (23) is L shaped and the second free edge (24) is arranged in a horizontally extending slot portion (23a) which slot portion extends into the spindle nut receiving leg (18) on a bottom side of the spindle nut (19) facing away from said one shoulder (2).

10. The lathe according to one of the preceding claims, wherein the second protective plate (22) has a third free edge (25) extending in the z direction overlapping first linear guide slot between either one (6) of the linear guide rails and either one (7) of the linear guide carriages in the horizontal direction.

11. The lathe according to one of the preceding claims, wherein a third protective plate (26) extending in the z direction is attached to the other opposite shoulder (3), the fourth free edge (27) of which protective plate extending in the z direction overlaps a second linear guide slot between the other one (8) of the linear guide rails and the other one (9) of the linear guide carriages in the horizontal direction.

## Revendications

1. Tour comportant un chariot (28) guidé sur un banc (1), ledit chariot pouvant être déplacé dans un sens z au moyen d'une broche (20) entraînée par un moteur (21),
en ce que deux épaulements (2, 3) s'étendant dans le sens z sont prévus au niveau des faces externes (A, A') du banc (1) qui sont opposées l'une par rapport à l'autre dans un sens x,
en ce qu'un guidage linéaire s'étendant dans un sens z repose sur une surface d'appui (4, 5) de chaque épaulement (2, 3) qui est orientée vers le chariot (28), et
en ce que le chariot (28) est monté pour le déplacement dans le sens z sur les deux guidages linéaires,
**caractérisé en ce que** respectivement une première tôle de protection (14, 16) s'étendant dans le sens z est montée au niveau du banc (1) dans une position opposée aux surfaces d'appui (4, 5), dont la première arête libre (15, 17) s'étendant dans le sens z s'engage dans une première fente (11, 13) y correspondant dans un côté support (10, 12) du chariot (28) à partir de sa face interne.

2. Tour selon la revendication 1, en ce que chaque surface d'appui (4, 5) s'étend sensiblement horizontalement à partir du banc (1).

3. Tour selon l'une des revendications précédentes, en ce que le guidage linéaire est un guidage linéaire par roulement.

4. Tour selon l'une des revendications précédentes, en ce que le guidage linéaire comprend un rail de guidage linéaire (6, 8) fixé sur la surface d'appui (4, 5) et un chariot de guidage linéaire (7, 9) guidé sur celui-ci, le chariot de guidage linéaire étant monté sur un côté support (10, 12) s'étendant d'une face inférieure du chariot (28) qui est orientée vers le banc (1).

5. Tour selon la revendication 4, en ce que le côté support (10, 12) comporte une face extérieure opposée au banc (1), de préférence sensiblement fermée et une face intérieure orientée vers le banc (1).

6. Tour selon l'une des revendications 4 à 5, en ce qu'une branche réceptrice d'écrou de broche (18) est prévue au niveau d'un des côtés support (10, 12), laquelle s'étend vers le banc (1) dans une zone recouverte par l'épaulement adjacent (2).

7. Tour selon la revendication 6, en ce que l'écrou de broche (19) est disposé dans la branche réceptrice d'écrou de broche (18) dans la zone recouverte.

8. Tour selon l'une des revendications précédentes, en ce qu'une deuxième tôle de protection (22) s'étendant dans le sens z est montée au niveau d'un épaulement (2) formant la zone recouverte, dont la deuxième arête libre (24) s'étendant dans le sens z s'engage dans une deuxième fente (23) y correspondant dans la branche réceptrice d'écrou de broche (18).

9. Tour selon l'une des revendications précédentes, en ce que la deuxième fente (23) est réalisée sous forme de L et la deuxième arête libre (24) est disposée dans un segment de fente (23a) s'étendant horizontalement, lequel s'étend dans la branche réceptrice d'écrou de broche (18) au niveau de la face inférieure de l'écrou de broche (19) qui est opposée à un épaulement (2).

10. Tour selon l'une des revendications précédentes, en ce que la deuxième tôle de protection (22) comporte une troisième arête libre (25) s'étendant dans le sens z, laquelle recouvre une première fente de guidage linéaire entre un rail de guidage linéaire (6) et un chariot de guidage linéaire (7) dans un sens horizontal.

11. Tour selon l'une des revendications précédentes, en ce qu'une troisième tôle de protection (26) s'étendant dans le sens z est montée au niveau de l'autre épaulement (3) opposé, dont la quatrième arête libre (27) s'étendant dans le sens z recouvre une deuxième fente de guidage linéaire entre l'autre rail de guidage linéaire (8) et l'autre chariot de guidage linéaire (9) dans le sens horizontal.
